# EUROPÄISCHE PATENTSCHRIFT

(11) **EP 3 894 736 B1**
(45) Veröffentlichungstag und Bekanntmachung des Hinweises auf die Patenterteilung: **18.09.2024**
(21) Anmeldenummer: 19805650.9
(22) Anmeldetag: 18.11.2019
(51) Int. Cl.: F17C 13/04

(54) **TANKVORRICHTUNG ZUR SPEICHERUNG EINES GASFÖRMIGEN MEDIUMS**
TANK DEVICE FOR STORING A GASEOUS MEDIUM
ENSEMBLE RÉSERVOIR CONÇU POUR STOCKER UN MILIEU GAZEUX

(30) Priorität: 13.12.2018 DE 102018221602
(43) Veröffentlichungstag der Anmeldung: 20.10.2021
(73) Patentinhaber: Robert Bosch GmbH, 70442 Stuttgart (DE)
(72) Erfinder: RAU, Andreas, 70469 Stuttgart (DE); HAHN, Joerg, 71384 Weinstadt (DE); SCHAICH, Udo, 70378 Stuttgart (DE)
(86) Internationale Anmeldenummer: PCT/EP2019/081602
(87) Internationale Veröffentlichungsnummer: WO 2020/120074

(56) Entgegenhaltungen:
- WO-A1-2015/129159
- WO-A1-2016/146773
- US-A- 5 458 151
- US-A1- 2006 219 298
- US-A1- 2014 239 207

## Beschreibung

Die Erfindung betrifft eine Tankvorrichtung für einen Brennstoffzellentank, insbesondere zur Speicherung von Wasserstoff, beispielsweise zur Anwendung in Fahrzeugen mit Brennstoffzellenantrieb.

### Stand der Technik

Die nicht vorveröffentlichte DE 10 2018 209 057 A1 beschreibt eine Tankvorrichtung zur Temperaturdruckentlastung eines Brennstoffzellentanks, wobei die Tankvorrichtung Tankbehälter mit verschiedenen Ventilen, wie beispielsweise ein Absperrventil, umfasst, welche eine ordentliche Funktionsweise beispielsweise eines Brennstoffzellensystems gewährleisten.

Die Sicherheitsvorrichtungen für solch eine Tankvorrichtung sind normiert. Dabei muss jede Tankvorrichtung solch ein Absperrventil aufweisen. So kann das Absperrventil bei einer Beschädigung der Tankvorrichtung hervorgerufen durch einen Unfall des Fahrzeugs mit Brennstoffzellenantrieb oder bei einem Bruch einer Leitung der Tankvorrichtung die Tankbehälter verschließen, so dass kein Gas aus der Speichereinheit austreten kann.

Die Vielzahl der Ventile kann so zu einer komplexen und kostenintensiven Tankvorrichtung führen.

Die US 2006/219298 A1 beschreibt ein Gastanksystem mit einem Magnetventil.

Die WO 2016/146773 A1 beschreibt eine Ventilanordnung für Gasbehälter.

### Vorteile der Erfindung

Die erfindungsgemäße Tankvorrichtung mit den kennzeichnenden Merkmalen des Anspruchs 1 weist demgegenüber den Vorteil auf, dass das jeweilige Sicherheitsventil einen kompakten, kostengünstigen Aufbau aufweist, wobei die hohen Sicherheitsanforderungen bezüglich Gasdichtheit zu jeder Zeit erfüllt sind. Dazu weist die Tankvorrichtung zur Speicherung eines gasförmigen Mediums, insbesondere Wasserstoff, eine Ventilvorrichtung und einen Tank auf. Die Ventilvorrichtung weist ein Ventilgehäuse mit einer Längsachse auf, in welchem Ventilgehäuse ein Innenraum ausgebildet ist. In dem Innenraum ist ein entlang der Längsachse bewegliches Ansteuerventilelement angeordnet, welches Ansteuerventilelement zum Öffnen und Schließen einer Auslassöffnung mit einem Ventilsitz zusammenwirkt und so ein Ansteuerventil ausbildet. Die Ventilvorrichtung umfasst weiterhin eine Magnetspule. Darüber hinaus ist der Ventilsitz stromabwärts an dem Ventilgehäuse und an der Auslassöffnung ausgebildet und die zylinderförmige Auslassöffnung mündet in einen zylinderförmigen Durchlasskanal, wobei ein Durchmesser D des Durchlasskanals größer ist als ein Durchmesser d der Auslassöffnung. Erfindungsgemäß ist an dem Ansteuerventilelement ein Dichtkörper angeordnet, welcher Dichtkörper eine halbkugelförmige Spitze aufweist. Vorteilhafterweise ist der Dichtkörper aus einem Kunststoff hergestellt.

Auf diese Weise kann ein kompakt konstruiertes, einfachschaltendes Sicherheitsmagnetventil erzielt werden, das aufgrund der integrierten Bauweise die Sicherheitsanforderungen erfüllt und eine Kostenersparnis erzielt. In erster vorteilhafter Weiterbildung ist es vorgesehen, dass der Durchlasskanal mittels eines konischen Übergangsbereichs in die Auslassöffnung übergeht. In weiterer Ausgestaltung der Erfindung ist es vorteilhaft vorgesehen, dass der Tank einen Halsbereich aufweist, in welchem Halsbereich die Ventilvorrichtung angeordnet ist. Vorteilhafterweise weist die Tankvorrichtung ein Ummantelungselement auf, durch welches Ummantelungselement die Ventilvorrichtung fest in dem Halsbereich des Tanks integriert und gegen eine Umgebung abgedichtet ist. So kann die Robustheit der gesamten Tankvorrichtung gewährleistet werden, da durch die Integration der Ventilvorrichtung in den Tank eine hohe Stabilität erzielbar ist. Auch im Falle eines Unfalls ist die Ventilvorrichtung vor äußeren Einflüssen geschützt. In weiterer Ausgestaltung der Erfindung ist es vorteilhaft vorgesehen, dass in dem Halsbereich eine Durchlassöffnung ausgebildet ist, wobei die Durchlassöffnung in den Tankinnenraum mündet. Dies führt zu einer höheren Robustheit des gesamten Tanks, insbesondere im Falle eines Unfalls.

In vorteilhafter Weiterbildung ist der Innenraum des Ventilgehäuses mittels einer in dem Ventilgehäuse ausgebildeten Einlassöffnung mit einem Tankinnenraum verbindbar. So ist in einfacher Weise der Strömungsquerschnitt an gasförmigem Medium aus dem Tank steuerbar.

In weiterer Ausgestaltung der Erfindung ist es vorteilhaft vorgesehen, dass in einer Ausnehmung des Ansteuerventilelements eine Feder angeordnet und ein Federraum ausgebildet ist, durch welche Feder das Ansteuerventilelement mit einer Kraft in Richtung des Ventilsitzes beaufschlagt ist. So ist bei nicht bestromter Magnetspule die Dichtheit der Ventilvorrichtung gewährleistet. In vorteilhafter Weiterbildung weist das Ansteuerventilelement eine Längsöffnung und weitere Öffnungen auf, welche Längsöffnung und welche weiteren Öffnungen fluidisch mit dem Federraum verbunden sind. So ist in optimaler Weise die Einlassöffnung mit der Auslassöffnung der Ventilvorrichtung verbindbar.

In weiterer Ausgestaltung der Erfindung ist es vorteilhaft vorgesehen, dass der Ventilsitz konisch ausgebildet ist, wobei der Ventilsitz zum Öffnen und Schließen der Auslassöffnung mit der halbkugelförmigen Spitze des Dichtkörpers zusammenwirkt. So ist eine hohe Dichtheit am Ventilsitz erzielbar.

Die beschriebene Tankvorrichtung eignet sich vorzugsweise in einer Brennstoffzellenanordnung zur Speicherung von Wasserstoff für den Betrieb einer Brennstoffzelle.

### Zeichnungen

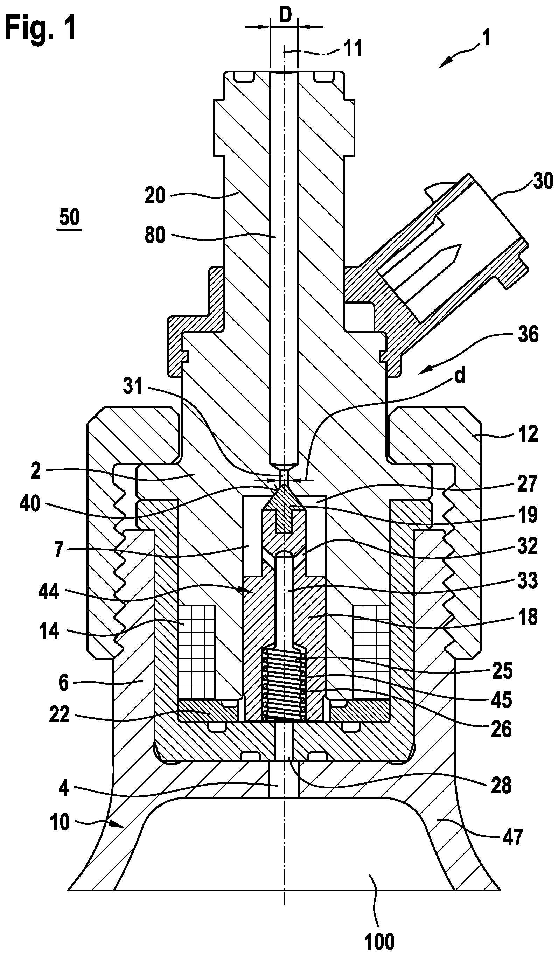

In der Zeichnung sind Ausführungsbeispiele einer erfindungsgemäßen Tankvorrichtung zur Speicherung eines gasförmigen Mediums, insbesondere Wasserstoff, dargestellt. Es zeigt in
- Fig.: ein Ausführungsbeispiel einer erfindungsgemäßen Tankvorrichtung mit einer Ventilvorrichtung im Längsschnitt.

### Beschreibung des Ausführungsbeispiels

In der **Fig.** ist ein Ausführungsbeispiel einer erfindungsgemäßen Tankvorrichtung 1 für ein gasförmiges Medium gezeigt. Die Tankvorrichtung 1 weist einen Tank 10 und eine Ventilvorrichtung 2 auf. Der Tank 10 weist ein Tankgehäuse 47 auf, in dem ein Tankinnenraum 100 ausgebildet ist. Das Tankgehäuse 47 umfasst weiterhin einen Halsbereich 6, der einen Bodenbereich aufweist, in dem eine Durchlassöffnung 4 ausgebildet ist. Diese Durchlassöffnung 4 mündet an einem Ende in den Tankinnenraum 100, in dem gasförmiges Medium, beispielsweise Wasserstoff, gespeichert werden kann.

An dem anderen Ende des Halsbereichs 6 ist die Ventilvorrichtung 2 in der Durchlassöffnung 4 des Tanks 10 angeordnet und in das Tankgehäuse 47 des Tanks 10 integriert. Der Halsbereich 6 wird außerdem von einem Ummantelungselement 12 umgeben, so dass die Ventilvorrichtung 2 und der Tankinnenraum 100 von einer Umgebung 50 abgedichtet sind.

Gasförmiges Medium, insbesondere Wasserstoff, kann so beispielsweise einem Anodenbereich einer Brennstoffzelle in einer Brennstoffzellenanordnung über die Ventilvorrichtung 2 aus dem Tankinnenraum 100 über einen zylinderförmigen Durchlasskanal 80 zugeführt werden.

Die Ventilvorrichtung 2 weist ein Ventilgehäuse 20 mit einer Längsachse 11 auf, in dem ein stufenförmiger Innenraum 7 ausgebildet ist. Die Ventilvorrichtung 2 weist in dem Ventilgehäuse 20 eine zylinderförmige Einlassöffnung 28 und eine zylinderförmige Auslassöffnung 31 auf, wobei die Einlassöffnung 28 in die Durchlassöffnung 4 des Tanks 10 in dem Halsbereich 6 mündet. Sowohl die Anströmung als auch die Abströmung der Ventilvorrichtung 2 erfolgt hier axial zu der Längsachse 11 der Ventilvorrichtung 2.

Weiterhin ist in dem Ventilgehäuse 20 eine Magnetspule 14 aufgenommen und integriert, wobei die Magnetspule 14 mittels eines Stützelements 22 in dem Ventilgehäuse 20 fixiert und mittels eines Dichtelements 32 an dem Stützelement 22 gegen den Innenraum 7 abgedichtet ist. Die Magnetspule 14 ist dabei über einen elektrischen Anschluss 30 ansteuerbar.

In dem Innenraum 7 ist ein entlang der Längsachse 11 bewegliches Ansteuerventilelement 18 angeordnet. Das Ansteuerventilelement 18 und das Ventilgehäuse 20 begrenzen einen Ringraum 27 und einen Federraum 25. Der Ringraum 27 mündet dabei in die Auslassöffnung 31, wohingegen der Federraum 25 in die Einlassöffnung 28 mündet.

Am Ansteuerventilelement 18 ist ein Dichtkörper 19 angeordnet, der zusammen mit einem an dem Ventilgehäuse 20 konisch ausgebildeten Ventilsitz 40 ein Ansteuerventil 44 ausbildet. Der Dichtkörper 19 weist eine halbkugelförmige Spitze auf, mit der er auf dem Ventilsitz 40 aufliegt, und ist vorzugsweise aus einem Kunststoff gefertigt. Durch das Ansteuerventil 44 kann eine Verbindung zwischen dem Ringraum 27 und der Auslassöffnung 31 und damit dem Durchlasskanal 80 geöffnet und geschlossen werden.

Der Durchlasskanal 80 mündet dabei mittels eines konischen Übergangsbereichs 36 in die Auslassöffnung 31, wobei der Durchlasskanal 80 einen Durchmesser D und die Auslassöffnung 31 einen Durchmesser d aufweisen. Der Durchmesser D des Durchlasskanals 80 ist größer als der Durchmesser d der Auslassöffnung 31.

In dem Ansteuerventilelement 18 sind eine Längsöffnung 33 und weitere Öffnungen 32 ausgebildet. Die weiteren Öffnungen 32 münden in den Ringraum 27 und die Längsöffnung 33 mündet einerseits in die weiteren Öffnungen 32 und andererseits in den Federraum 25.

Weiterhin weist das Ansteuerventilelement 18 eine Ausnehmung 45 auf, welche mit der Längsöffnung 33 verbunden ist. In der Ausnehmung 45 ist der Federraum 25 ausgebildet und eine Feder 26 angeordnet, welche sich einerseits an dem Ventilgehäuse 20 und andererseits an dem Ansteuerventilelement 18 abstützt und welche das Ansteuerventilelement 18 in Richtung des Ventilsitzes 40 drückt.

Das Ventilgehäuse 20 ist hier mehrteilig ausgebildet, so dass die Magnetspule 14 zwischen dem mehrteiligen Ventilgehäuse 20 aufgenommen und integriert ist.

### Funktionsweise der Ventilvorrichtung

Bei nicht bestromter Magnetspule 14 ist der Ventilsitz 40 durch die Kraft der Feder 26 geschlossen, so dass die Verbindung zwischen der Einlassöffnung 28 und der Auslassöffnung 31 geschlossen ist. Somit kann auch kein gasförmiges Medium aus dem Tankinnenraum 100 über das Ansteuerventil 44 in Richtung eines Systems, beispielsweise die Brennstoffzellenanordnung, strömen. In dem Tankinnenraum 100 herrscht Hochdruck von beispielsweise 700 bar. In der Brennstoffzellenanordnung hingegen herrscht Niederdruck.

Wird die Magnetspule 14 bestromt, so bildet sich ein magnetisches Feld aus, was zu einer Kraftwirkung zwischen dem Ventilgehäuse 20 und dem Ansteuerventilelement 18 führt. Dadurch wird eine magnetische Kraft auf das Ansteuerventilelement 18 erzeugt, welche der Kraft der Feder 26 und den durch das gasförmige Medium erzeugten Druckkräften entgegengerichtet ist. Dies führt dazu, dass das Ansteuerventilelement 18 von dem Ventilsitz 40 abhebt und diesen freigibt. Die Verbindung zwischen der Einlassöffnung 28 und der Auslassöffnung 31 ist nun freigegeben. Gasförmiges Medium strömt nun über die Einlassöffnung 28, den Federraum 25, Längsöffnung 33 und die weiteren Öffnungen 32, den Ringraum 27 und die Auslassöffnung 31 in den Durchlasskanal 80 aus dem Tankinnenraum 100 in Richtung des Systems.

Soll die Wasserstoff-Zufuhr zu der Brennstoffzelle unterbrochen werden, wird die Magnetspule 14 nicht weiter bestromt, so dass die magnetische Kraft abgebaut wird und sich das Ansteuerventilelement 18 mittels der Kraft der Feder 26 wieder in Richtung des Ventilsitzes 40 bewegt und diesen schließt.

Der Durchmesser d der Auslassöffnung 31, der Durchmesser D der Durchlasskanal 80 und der Hub des Ansteuerventilelements 18 sind vorteilhafterweise so ausgelegt, dass die Brennstoffzelle in allen Betriebszuständen mit einem ausreichenden Massenstrom an Wasserstoff versorgt wird. Dabei ist der Durchmesser D der Durchlasskanal 80 größer als der Durchmesser d der Auslassöffnung 31.

Außerdem kann dadurch im Falle einer Befüllung des Tanks 10 mit gasförmigem Medium, hier Wasserstoff, bei dem die Strömrichtung von der Auslassöffnung 31 in Richtung der Einlassöffnung 28 verläuft, der Tank 10 in kurzer Zeit, beispielsweise in wenigen Minuten, befüllt werden.

## Patentansprüche

1. Tankvorrichtung (1) zur Speicherung eines gasförmigen Mediums, insbesondere Wasserstoff, mit einer Ventilvorrichtung (2) und einem Tank (10), wobei die Ventilvorrichtung (2) ein Ventilgehäuse (20) mit einer Längsachse (11) aufweist, in welchem Ventilgehäuse (20) ein Innenraum (7) ausgebildet ist, in welchem Innenraum (7) ein entlang der Längsachse (11) bewegliches Ansteuerventilelement (18) angeordnet ist, welches Ansteuerventilelement (18) zum Öffnen und Schließen einer Auslassöffnung (31) mit einem Ventilsitz (40) zusammenwirkt und so ein Ansteuerventil (44) ausbildet, wobei die Ventilvorrichtung (2) eine Magnetspule (14) umfasst, wobei der Ventilsitz (40) stromabwärts an dem Ventilgehäuse (20) und an der Auslassöffnung (31) ausgebildet ist und die zylinderförmige Auslassöffnung (31) in einen zylinderförmigen Durchlasskanal (80) mündet, wobei ein Durchmesser D des Durchlasskanals (80) größer ist als ein Durchmesser d der Auslassöffnung (31), **dadurch gekennzeichnet, dass** an dem Ansteuerventilelement (18) ein Dichtkörper (19) angeordnet ist, welcher Dichtkörper (19) eine halbkugelförmige Spitze aufweist, wobei der Dichtkörper (19) aus einem Kunststoff hergestellt ist.

2. Tankvorrichtung (1) nach Anspruch 1, **dadurch gekennzeichnet, dass** der Durchlasskanal (80) mittels eines konischen Übergangsbereichs (36) in die Auslassöffnung (31) übergeht.

3. Tankvorrichtung (1) nach einem der vorhergehenden Ansprüche, **dadurch gekennzeichnet, dass** der Tank (10) einen Halsbereich (6) aufweist, in welchem Halsbereich (6) die Ventilvorrichtung (2) angeordnet ist.

4. Tankvorrichtung (1) nach Anspruch 3, **dadurch gekennzeichnet, dass** die Tankvorrichtung (1) ein Ummantelungselement (12) aufweist, durch welches Ummantelungselement (12) die Ventilvorrichtung (2) fest in dem Halsbereich (6) des Tanks (10) integriert und gegen eine Umgebung (50) abgedichtet ist.

5. Tankvorrichtung (1) nach Anspruch 3 oder 4, **dadurch gekennzeichnet, dass** in dem Halsbereich (6) eine Durchlassöffnung (4) ausgebildet ist, wobei die Durchlassöffnung (4) in den Tankinnenraum (100) mündet.

6. Tankvorrichtung (1) nach einem der vorhergehenden Ansprüche, **dadurch gekennzeichnet, dass** der Innenraum (20) des Ventilgehäuses (20) mittels einer in dem Ventilgehäuse (20) ausgebildeten Einlassöffnung (28) mit einem Tankinnenraum (100) verbindbar ist.

7. Tankvorrichtung (1) nach einem der vorhergehenden Ansprüche, **dadurch gekennzeichnet, dass** in einer Ausnehmung (45) des Ansteuerventilelements (18) eine Feder (26) angeordnet und ein Federraum (25) ausgebildet ist, durch welche Feder (26) das Ansteuerventilelement (18) mit einer Kraft in Richtung des Ventilsitzes (40) beaufschlagt ist.

8. Tankvorrichtung (1) nach Anspruch 7, **dadurch gekennzeichnet, dass** das Ansteuerventilelement (18) eine Längsöffnung (33) und weitere Öffnungen (32) aufweist, welche Längsöffnung (33) und welche weiteren Öffnungen (32) fluidisch mit dem Federraum (25) verbunden sind.

9. Tankvorrichtung (1) nach einem der vorhergehenden Ansprüche, **dadurch gekennzeichnet, dass** der Ventilsitz (40) konisch ausgebildet ist, wobei der Ventilsitz (40) zum Öffnen und Schließen der Auslassöffnung (31) mit der halbkugelförmigen Spitze des Dichtkörpers (19) zusammenwirkt.

10. Brennstoffzellenanordnung mit einer Tankvorrichtung (1) zur Speicherung von Wasserstoff für den Betrieb einer Brennstoffzelle nach einem der vorhergehenden Ansprüche.

## Claims

1. Tank device (1) for storing a gaseous medium, in particular hydrogen, having a valve device (2) and a tank (10), wherein the valve device (2) has a valve housing (20) with a longitudinal axis (11), in which valve housing (20) is formed an inner chamber (7), in which inner chamber (7) a pilot valve element (18) movable along the longitudinal axis (11) is arranged, which pilot valve element (18) interacts with a valve seat (40) in order to open and close an outlet opening (31) and thus forms a pilot valve (44), wherein the valve device (2) comprises a magnet coil (14), wherein the valve seat (40) is formed downstream of the valve housing (20) and of the outlet opening (31), and the cylindrical outlet opening (31) opens into a cylindrical passage (80), wherein a diameter D of the passage (80) is larger than a diameter d of the outlet opening (31), **characterized in that** a sealing body (19) is arranged on the pilot valve element (18), which sealing body (19) has a hemispherical point, wherein the sealing body (19) is produced from a plastic.

2. Tank device (1) according to Claim 1, **characterized in that** the passage (80) merges into the outlet opening (31) by means of a conical transition region (36).

3. Tank device (1) according to either of the preceding claims, **characterized in that** the tank (10) has a neck region (6), in which neck region (6) the valve device (2) is arranged.

4. Tank device (1) according to Claim 3, **characterized in that** the tank device (1) has a jacketing element (12), by means of which jacketing element (12) the valve device (2) is integrated fixedly in the neck region (6) of the tank (10) and sealed off from an environment (50).

5. Tank device (1) according to Claim 3 or 4, **characterized in that** a passage opening (4) is formed in the neck region (6), wherein the passage opening (4) opens into the tank interior (100).

6. Tank device (1) according to one of the preceding claims, **characterized in that** the interior (20) of the valve housing (20) is connectable to a tank interior (100) by means of an inlet opening (28) formed in the valve housing (20).

7. Tank device (1) according to one of the preceding claims, **characterized in that** a spring (26) is arranged and a spring chamber (25) formed in a recess (45) of the pilot valve element (18), by means of which spring (26) the pilot valve element (18) is subjected to a force in the direction of the valve seat (40).

8. Tank device (1) according to Claim 7, **characterized in that** the pilot valve element (18) has a longitudinal opening (33) and further openings (32), which longitudinal opening (33) and which further openings (32) are fluidically connected to the spring chamber (25).

9. Tank device (1) according to one of the preceding claims, **characterized in that** the valve seat (40) is conical, wherein the valve seat (40) interacts with the hemispherical point of the sealing body (19) in order to open and close the outlet opening (31).

10. Fuel cell arrangement having a tank device (1) for storing hydrogen for the operation of a fuel cell according to one of the preceding claims.

## Revendications

1. Dispositif de réservoir (1) pour le stockage d'un milieu gazeux, en particulier d'hydrogène, avec un dispositif de soupape (2) et un réservoir (10), le dispositif de soupape (2) présentant un boîtier de soupape (20) avec un axe longitudinal (11), boîtier de soupape (20) dans lequel est réalisé un espace intérieur (7), espace intérieur (7) dans lequel est agencé un élément de soupape de commande (18) mobile le long de l'axe longitudinal (11), lequel élément de soupape de commande (18) coopère avec un siège de soupape (40) pour ouvrir et fermer une ouverture de sortie (31) et réalise ainsi une soupape de commande (44), le dispositif de soupape (2) comprenant une bobine électromagnétique (14), le siège de soupape (40) étant réalisé en aval sur le boîtier de soupape (20) et sur l'ouverture de sortie (31), et l'ouverture de sortie cylindrique (31) débouchant dans un canal de passage cylindrique (80), un diamètre D du canal de passage (80) étant supérieur à un diamètre d de l'ouverture de sortie (31), **caractérisé en ce qu'**un corps d'étanchéité (19) est agencé sur l'élément de soupape de commande (18), lequel corps d'étanchéité (19) présente une pointe hémisphérique, le corps d'étanchéité (19) étant fabriqué en une matière plastique.

2. Dispositif de réservoir (1) selon la revendication 1, **caractérisé en ce que** le canal de passage (80) se raccorde à l'ouverture de sortie (31) au moyen d'une zone de transition conique (36).

3. Dispositif de réservoir (1) selon l'une quelconque des revendications précédentes, **caractérisé en ce que** le réservoir (10) présente une zone de col (6), zone de col (6) dans laquelle est agencé le dispositif de soupape (2).

4. Dispositif de réservoir (1) selon la revendication 3, **caractérisé en ce que** le dispositif de réservoir (1) comprend un élément d'enveloppe (12), par lequel élément d'enveloppe (12) le dispositif de soupape (2) est intégré de manière fixe dans la zone de col (6) du réservoir (10) et est rendu étanche par rapport à un environnement (50).

5. Dispositif de réservoir (1) selon la revendication 3 ou 4, **caractérisé en ce qu'**une ouverture de passage (4) est réalisée dans la zone de col (6), l'ouverture de passage (4) débouchant dans l'espace intérieur de réservoir (100).

6. Dispositif de réservoir (1) selon l'une quelconque des revendications précédentes, **caractérisé en ce que** l'espace intérieur (20) du boîtier de soupape (20) peut être relié à un espace intérieur de réservoir (100) au moyen d'une ouverture d'entrée (28) réalisée dans le boîtier de soupape (20).

7. Dispositif de réservoir (1) selon l'une quelconque des revendications précédentes, **caractérisé en ce qu'**un ressort (26) est agencé dans un évidement (45) de l'élément de soupape de commande (18) et un espace de ressort (25) est réalisé, ressort (26) par lequel l'élément de soupape de commande (18) est soumis à une force en direction du siège de soupape (40).

8. Dispositif de réservoir (1) selon la revendication 7, **caractérisé en ce que** l'élément de soupape de commande (18) présente une ouverture longitudinale (33) et d'autres ouvertures (32), laquelle ouverture longitudinale (33) et lesquelles autres ouvertures (32) sont reliées fluidiquement à l'espace de ressort (25).

9. Dispositif de réservoir (1) selon l'une quelconque des revendications précédentes, **caractérisé en ce que** le siège de soupape (40) est réalisé sous forme conique, le siège de soupape (40) coopérant avec la pointe hémisphérique du corps d'étanchéité (19) pour ouvrir et fermer l'ouverture de sortie (31).

10. Agencement de pile à combustible avec un dispositif de réservoir (1) pour le stockage d'hydrogène pour l'exploitation d'une pile à combustible selon l'une quelconque des revendications précédentes.
